# EUROPEAN PATENT SPECIFICATION

(11) **EP 0 514 058 B1**
(45) Date of publication and mention of the grant of the patent: **15.01.1997**
(21) Application number: 92304007.5
(22) Date of filing: 01.05.1992
(51) Int. Cl.: B01D 53/04, B01D 53/047, C01B 21/04

(54) **Pressure swing adsorption apparatus**
Druckwechsel-Adsorptionsvorrichtung
Dispositif d'adsorption à pression alternée

(30) Priority: 14.05.1991 GB 9110366
(43) Date of publication of application: 19.11.1992
(73) Proprietor: The BOC Group plc, Windlesham Surrey GU20 6HJ (GB)
(72) Inventor: Stratton, Paul Francis, Huddersfield, West Yorkshire, BD17 6JZ (GB)
(74) Representative: Gough, Peter

(56) References cited:
- EP-A- 0 075 663
- EP-A- 0 197 717
- EP-A- 0 438 282
- US-A- 4 425 143

## Description

The present invention relates to a method of and an apparatus for the production of high purity nitrogen from air using pressure swing adsorption (PSA) techniques.

It is known, for example, to produce nitrogen from air by pressure swing adsorption (PSA) techniques or by membrane separation.

United States Patent 4931070 describes a membrane separation plant for the production of high purity nitrogen. Air to be separated passes through first and second stage membrane separators and the nitrogen enriched gas leaving the second stage membrane separator then passes to a separate deoxo unit to which hydrogen is added. High purity nitrogen is recovered from the deoxo unit. The arrangement of the deoxo unit being separate from the separators and an individual unit increases the cost of the plant.

EP-A-0 075 663 discloses a method for producing high purity nitrogen from air comprising the steps of passing the air through a bed of molecular sieve adsorbent which preferentially adsorbs oxygen and carbon dioxide to produce a nitrogen enriched gas stream, the step of mixing the nitrogen enriched gas stream with hydrogen and the step of passing the mixture through a layer of catalyst where substantially all the oxygen which was not removed in the adsorption step and the hydrogen react to water. In this way a gas stream containing nitrogen and a minor amount of water is produced. Such an arrangement also relies on a separate catalytic unit and hence also suffer from the above-mentioned disadvantages.

It is an aim of the present invention to include within a pressure vessel of a PSA plant a deoxo layer thereby eliminating the necessity for a separate deoxo unit.

According to a first aspect of the present invention, there is provided an apparatus for producing nitrogen from air comprising a bed of molecular sieve adsorbent for adsorbing preferentially oxygen and carbon dioxide to provide a nitrogen enriched gas stream, means for introducing a reducing gas into the air or nitrogen enriched gas stream, a layer of catalyst downstream of the bed of molecular sieve, characterised in that both the molecular sieve adsorbent and the catalyst are contained in a single vessel with the molecular sieve being located adjacent the air inlet (2) of the vessel and the catalyst adjacent the product gas outlet (4) of the vessel and by a layer of allumina between the molecular sieve and catalyst to inhibit any water vapour or heat produced at the catalyst affecting the bed of molecular sieve.

According to a further aspect of the present invention, there is provided a method of producing nitrogen from air comprising the steps of:
a) passing the air through a bed of molecular sieve adsorbent which preferentially adsorbs a portion of the oxygen and the carbon dioxide to produce a nitrogen enriched gas stream;
b) mixing the air or the nitrogen enriched gas stream with a reducing gas;
c) passing the reducing gas containing nitrogen enriched gas stream through a layer of catalyst such that substantially all of any remaining oxygen is reduced to water and/or water vapour, in characterised in that steps a) and c) are conducted in the same vessel and the nitrogen enriched gas stream of step a) is passed through a layer of allumina before it is passed to the layer of catalyst thereby to inhibit any water vapour or heat produced at the catalyst affecting the bed of molecular sieve.

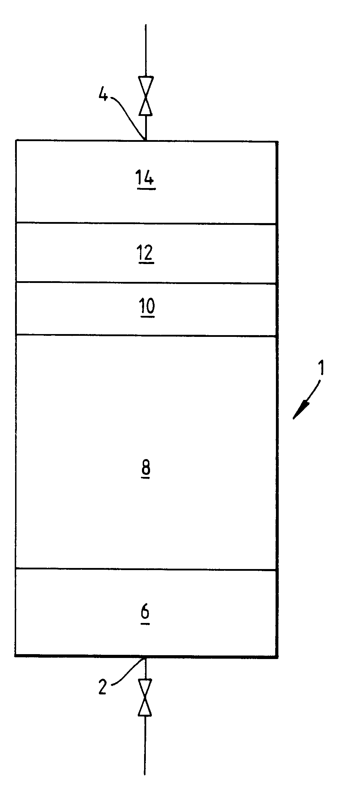

An embodiment of the invention will now be described by way of example, reference being made to the Figure of the accompanying diagrammatic drawing which is a schematic view of a vessel forming part of a pressure swing adsorption plant.

As shown, a pressure vessel 1 forming part of a pressure swing adsorption plant for the separation of nitrogen from feed air includes an inlet 2 for the feed air and an outlet 4 for product gas.

Immediately adjacent the inlet 2 within the vessel 1 there is located an alumina layer 6 for removing water/water vapour and some carbon dioxide from the feed air.

Immediately above (as shown) the layer 6 of alumina is a bed 8 of a molecular sieve adsorbent which preferentially adsorbs oxygen and carbon dioxide.

Immediately above the bed 8 there is located a second alumina layer 10 which separates the bed 8 from a layer of palladium catalyst 12.

Between the outlet 4 and the palladium catalyst 12 there is located a third alumina layer 14.

In use, when the pressure vessel 1 is in its adsorption mode feed air and a reducing gas such as hydrogen enters the vessel 1 via inlet 2. As previously explained the alumina layer 6 removes water/water vapour from the air/hydrogen mixture together with some carbon dioxide. The dried air/hydrogen mixture then passes through the main bed of molecular sieve adsorbent 8 where oxygen and carbon dioxide are preferentially adsorbed leaving a nitrogen enriched gas and hydrogen to pass through the alumina layer 10 and through the palladium catalyst 12 where substantially all the remaining oxygen is reduced to water/water vapour. Wet nitrogen then passes through the alumina layer 14 which separates the water/water vapour allowing dry nitrogen product gas to leave the vessel 1 at outlet 4.

The function of the alumina layer 10 is to inhibit any water/water vapour or heat produced by the palladium catalyst to affect adversely the bed of molecular sieve adsorbent 8.

In its desorption mode, the pressure vessel 1 is vented not only from its inlet 2 as is normal practice but also from its outlet 4 in order to flush the water/water vapour from both the lower layer 6 and the upper layer 14 of alumina. In this respect it is believed that the layer 10 of alumina also serves as a dry gas reservoir for flushing the upper (as shown) alumina layer 14.

If high purity but wet nitrogen as a product gas is no problem in, for example, heat treatment applications then the alumina layer 14 may be omitted.

A particular advantage of including a deoxo layer in a pressure vessel of a PSA plant is that it eliminates the cost of a special deoxo unit within the PSA system. There also appears to be energy savings over conventional PSA system in that alumina driers usually require significant amounts of power but in the embodiment described above the only extra power will be that required to compress the additional flushing gas entering the outlet 4.

Although illustrated as a one bed PSA system clearly the invention as defined by the claims accompanying this application can be used on a multi-bed PSA system.

## Claims

1. An apparatus for producing nitrogen from air comprising a bed of molecular sieve adsorbent (8) for adsorbing preferentially oxygen and carbon dioxide to provide a nitrogen enriched gas stream, means for introducing a reducing gas into the air or nitrogen enriched gas stream, a layer of catalyst (12) downstream of the bed (8) of molecular sieve, characterised in that both the molecular sieve adsorbent (8) and the catalyst (12) are contained in a single vessel (1) with the molecular sieve being located adjacent the air inlet (2) of the vessel and the catalyst adjacent the product gas outlet (4) of the vessel and by a layer of allumina (10) between the molecular sieve (8) and catalyst (12) to inhibit any water vapour or heat produced at the catalyst (12) affecting the bed of molecular sieve (8).

2. An apparatus as claimed in Claim 1, characterised in that the reducing gas is hydrogen which enters the vessel (1) with the air via the inlet (2).

3. An apparatus as claimed in Claim 1 or 2, characterised in that a further layer (6) of alumina is located in the vessel (1) adjacent the inlet (2), between the inlet (2) and the bed (8) of molecular sieve adsorbent for removing water vapour and some carbon dioxide from the air.

4. An apparatus as claimed in any one of Claims 1 to 3, characterised in that the catalyst (12) is palladium.

5. An apparatus as claimed in any one of Claims 1 of 4, characterised in that a further layer (14) of alumina is located immediately adjacent the outlet (4), between the outlet (4) and the layer of catalyst (12) for removing water/water vapour from the product gas prior to the product gas leaving the vessel (1) through the outlet (4).

6. A method of producing nitrogen from air comprising the steps of:
a) passing the air through a bed of molecular sieve adsorbent (8) which preferentially adsorbs a portion of the oxygen and the carbon dioxide to produce a nitrogen enriched gas stream;
b) mixing the air or the nitrogen enriched gas stream with a reducing gas;
c) passing the reducing gas containing nitrogen enriched gas stream through a layer of catalyst (12) such that substantially all of any remaining oxygen is reduced to water and/or water vapour, characterised in that steps a) and c) are conducted in the same vessel and the nitrogen enriched gas stream of step a) is passed through a layer of allumina (10) before it is passed to the layer of catalyst (12) thereby to inhibit any water vapour or heat produced at the catalyst (12) affecting the bed of molecular sieve (8).

7. A method as claimed in Claim 6, characterised by the step of removing water/water vapour and some carbon dioxide prior to passing the air through the bed (8) of molecular sieve adsorbent.

8. A method as claimed in Claim 6 or 7, characterised in that subsequent to passing the reducing gas containing nitrogen enriched gas stream through the layer of catalyst (12) the water/water vapour and nitrogen is passed through a further layer of alumina to separate the water/water vapour from the nitrogen.

## Patentansprüche

1. Eine Vorrichtung zum Produzieren von Stickstoff aus Luft mit einem Molekularsiebadsorptionsmittelbett (8) zum Adsorbieren bevorzugt von Sauerstoff und Kohlendioxid, um einen an Stickstoff angereicherten Gasstrom zu liefern, Mitteln zum Einleiten eines reduzierenden Gases in den an Luft oder Stickstoff angereicherten Gasstrom, einer Katalysatorschicht (12) stromabwärts des Molekularsiebbettes (8),
dadurch gekennzeichnet,
daß sowohl das Molekularsiebadsorptionsmittel (8) als auch der Katalysator (12) in einem einzigen Behälter (1) enthalten sind, wobei das Molekularsieb benachbart dem Lufteinlaß (2) des Behälters und der Katalysator benachbart dem Produktgasauslaß (4) des Behälters angeordnet sind, und durch eine Aluminiumoxidschicht (10) zwischen dem Molekularsieb (8) und dem Katalysator (12), um zu verhindern, daß irgendwelcher Wasserdampf oder Wärme, die am Katalysator (12) produziert werden, sich auf das Molekularsiebbett (8) auswirken.

2. Eine Vorrichtung, wie in Anspruch 1 beansprucht,
dadurch gekennzeichnet,
daß das reduzierende Gas Wasserstoff ist, der in den Behälter (1) mit der Luft über den Einlaß (2) eintritt.

3. Eine Vorrichtung, wie in Anspruch 1 oder 2 beansprucht,
dadurch gekennzeichnet,
daß eine weitere Aluminiumoxidschicht (6) in dem Behälter (1) benachbart dem Einlaß (2) zwischen dem Einlaß (2) und dem Molekularsiebadsorptionsmittelbett (8) angeordnet ist, um Wasserdampf und etwas Kohlendioxid aus der Luft zu entfernen.

4. Eine Vorrichtung, wie in einem der Ansprüche 1 bis 3 beansprucht,
dadurch gekennzeichnet,
daß der Katalysator (12) Palladium ist.

5. Eine Vorrichtung, wie in einem der Ansprüche 1 bis 4 beansprucht,
dadurch gekennzeichnet,
daß eine weitere Aluminiumoxidschicht (14) unmittelbar benachbart dem Auslaß (4) zwischen dem Auslaß (4) und der Katalysatorschicht (12) angeordnet ist, um Wasser/Wasserdampf aus dem Produktgas zu entfernen, bevor das Produktgas den Behälter (1) durch den Auslaß (4) verläßt.

6. Ein Verfahren zum Produzieren von Stickstoff aus Luft mit den Schritten, daß
a) Luft durch ein Molekularsiebadsorptionsmittelbett (8) geleitet wird, welches bevorzugt einen Teil des Sauerstoffes und des Kohlendioxides adsorbiert, um einen an Stickstoff angereicherten Gasstrom zu produzieren,
b) der an Luft oder Stickstoff angereicherte Gasstrom mit einem reduzierenden Gas gemischt wird,
c) das reduzierende Gas, das den an Stickstoff angereicherten Gasstrom enthält, durch eine Katalysatorschicht (12) geleitet wird, derart daß im wesentlichen alles von irgendeinem verbleibenden Sauerstoff zu Wasser und/oder Wasserdampf reduziert wird,
dadurch gekennzeichnet,
daß die Schritte a) und c) in dem gleichen Behälter durchgeführt werden, und daß der an Stickstoff angereicherte Gasstrom von Schritt a) durch eine Aluminiumoxidschicht (10) geleitet wird, bevor er zu der Katalysatorschicht (12) geleitet wird, wodurch verhindert wird, daß irgendwelcher Wasserdampf oder Wärme, die am Katalysator (12) produziert werden, sich auf das Molekularsiebbett (8) auswirken.

7. Ein Verfahren, wie in Anspruch 6 beansprucht,
gekennzeichnet durch
den Schritt, daß Wasser/Wasserdampf und etwas Kohlendioxid vor dem Leiten der Luft durch das Molekularsiebadsorptionsmittelbett (8) entfernt werden.

8. Ein Verfahren, wie in Anspruch 6 oder 7 beansprucht,
dadurch gekennzeichnet,
daß nach dem Leiten des reduzierenden Gases, das den an Stickstoff angereicherten Gasstrom enthält, durch die Katalysatorschicht (12), das Wasser/der Wasserdampf und Stickstoff durch eine weitere Aluminiumoxidschicht geleitet werden, um das Wasser/den Wasserdampf von dem Stickstoff zu trennen.

## Revendications

1. Appareil ou dispositif pour produire de l'azote à partir de l'air, ce dispositif comprenant un lit de tamis moléculaire adsorbant (8) pour absorber préférentiellement l'oxygène et le dioxyde de carbone afin de fournir un courant de gaz enrichi en azote, un moyen pour introduire un gaz réducteur dans le courant gazeux formé par l'air ou enrichi en azote, une couche de catalyseur (12) en aval du lit (8) de tamis moléculaire, appareil caractérisé en ce que le tamis moléculaire adsorbant (8) et le catalyseur (12) sont contenus dans un récipient (1) unique, le tamis moléculaire étant situé près de l'entrée (2) d'air du récipient et le catalyseur près de la sortie (4) du récipient destinée au passage du gaz produit, et en ce qu'il comporte une couche d'alumine (10) située entre le tamis moléculaire (8) et le catalyseur (12) pour empêcher toute la vapeur d'eau ou la chaleur éventuellement produites au niveau du catalyseur (12) d'affecter le lit du tamis moléculaire (8).

2. Appareil tel que revendiqué à la revendication 1, caractérisé en ce que le gaz réducteur est de l'hydrogène, qui entre dans le récipient (1) avec l'air en empruntant l'entrée (2).

3. Appareil tel que revendiqué à la revendication 1 ou 2, caractérisé en ce qu'une couche (6) supplémentaire d'alumine est située dans le récipient (1) près de l'entrée (2), entre l'entrée (2) et le lit (8) de tamis moléculaire adsorbant, pour enlever la vapeur d'eau et un peu de dioxyde de carbone de l'air.

4. Appareil tel que revendiqué dans l'une quelconque des revendications 1 à 3, caractérisé en ce que le catalyseur (12) est du palladium.

5. Appareil tel que revendiqué dans l'une quelconque des revendications 1 à 4, caractérisé en ce qu'une couche (14) supplémentaire d'alumine est située au voisinage immédiat de la sortie (4) entre la sortie (4) et la couche de catalyseur (12) pour enlever l'eau/la vapeur d'eau du gaz produit avant que le gaz produit ne quitte le récipient (1) en empruntant la sortie (4).

6. Procédé pour produire de l'azote à partir de l'air, ce procédé comprenant les étapes consistant à :
(a) faire passer l'air à travers un lit de tamis moléculaire adsorbant (8), qui adsorbe préférentiellement une partie de l'oxygène et du dioxyde de carbone pour produire un courant gazeux enrichi en azote ;
(b) mélanger avec un gaz réducteur l'air ou le courant gazeux enrichi en azote ;
(c) faire passer à travers un lit de catalyseur (12) le courant gazeux enrichi en azote et contenant du gaz réducteur, de manière à réduire en eau et/ou en vapeur d'eau la quasi-totalité de tout l'oxygène éventuellement restant, procédé caractérisé en ce que les étapes (a) et (c) sont conduites dans le même récipient et en ce qu'on fait passer le courant gazeux, enrichi en oxygène, de l'étape (a) à travers une couche d'alumine (10) avant de l'envoyer vers la couche du catalyseur (12), de façon à empêcher toute la vapeur d'eau ou la chaleur éventuellement produite au niveau du catalyseur (12) d'affecter le lit du tamis moléculaire (8).

7. Procédé tel que revendiqué à la revendication 8, caractérisé par l'étape consistant à enlever l'eau/la vapeur d'eau et un peu de dioxyde de carbone, avant de faire passer l'air à travers le lit (8) de tamis moléculaire adsorbant.

8. Procédé tel que revendiqué à la revendication 6 ou 7, caractérisé en ce qu'après avoir fait passer à travers la couche du catalyseur (12) le courant gazeux enrichi en azote et contenant du gaz réducteur, on fait passer à travers une couche supplémentaire d'alumine l'eau/la vapeur d'eau et l'azote pour séparer l'eau/la vapeur d'eau de l'azote.
